# EUROPEAN PATENT APPLICATION

(11) **EP 1 232 845 A1**
(43) Date of publication of application: **21.08.2002**
(21) Application number: 02075388.5
(22) Date of filing: 31.01.2002
(51) Int. Cl.: B29C 45/12

(54) **A machine for injection moulding of rubber products**

(30) Priority: 05.02.2001 IT MI010217
(71) Applicant: RUTIL S.r.l., 21050 Lonate Ceppino (Varese) (IT)
(72) Inventor: Coscia, Gianni, 21100 Varese (IT)
(74) Representative: Faraggiana, Vittorio, Dr. Ing.

(57) **Abstract**

The present invention relates to a machine for injection moulding of rubber products, comprising a plurality of moulding units (22) to be operated separately for carrying out a moulding cycle. The moulding units (22) are mounted on a common support (21) and each unit receives the rubber blend to be used in moulding through a duct (29) branched off from a channel (26) fed by a common injection unit. The branched-off feeding ducts (29) of the units are intercepted by a dispensing element moved step by step to sequentially open a predetermined number of the branched-off ducts, so that the corresponding moulding units (22) are driven to receive the rubber to be introduced into the mould (30,35) for execution of moulding.

## Description

The present invention relates to a machine for injection moulding of rubber products. In particular, it relates to a multi-station machine of high productivity.

In a machine for injection moulding of rubber, the mould receiving the material is always required to remain closed and under pressure over the whole time necessary for vulcanisation of the material itself.

Therefore, due to its own nature, the moulding unit has a production cycle that goes on for a period of time during which it is at a standstill, comprised between the moment of injection of the material into the mould and the moment of opening of the mould to withdraw the moulded article, which mould is then closed again to be brought back to the cycle starting conditions.

In order to increase productivity of a moulding machine it is possible to use a single feeding and injection unit which is brought to feed each of a number of moulds in succession. The solution appears to be particularly useful when a relatively long vulcanisation time is required, so as to avoid a correspondingly long time of inactivity of the machine.

Generally, these multi-station machines with a moving injector are complicated and bulky.

It is an aim of the present invention to provide a machine of high productivity with reduced bulkiness, adapted for production of rubber articles by injection.

In accordance with the invention, a machine for injection moulding of rubber products comprises a plurality of moulding units to be operated separately for carrying out a moulding cycle, in which the moulding units are mounted on a common support and each unit receives the rubber blend to be used in moulding through a duct branched off from a channel fed by a common injection unit, the branched-off feeding ducts being intercepted by a dispensing element moved step by step to sequentially open a predetermined number of the branched-off ducts corresponding to the moulding units that are driven to receive the rubber to be introduced into the mould for execution of moulding.

For better explaining the features and advantages of the machine in accordance with the invention, an embodiment of same will be described hereinafter, by way of example, and illustrated in the accompanying drawings, in which:

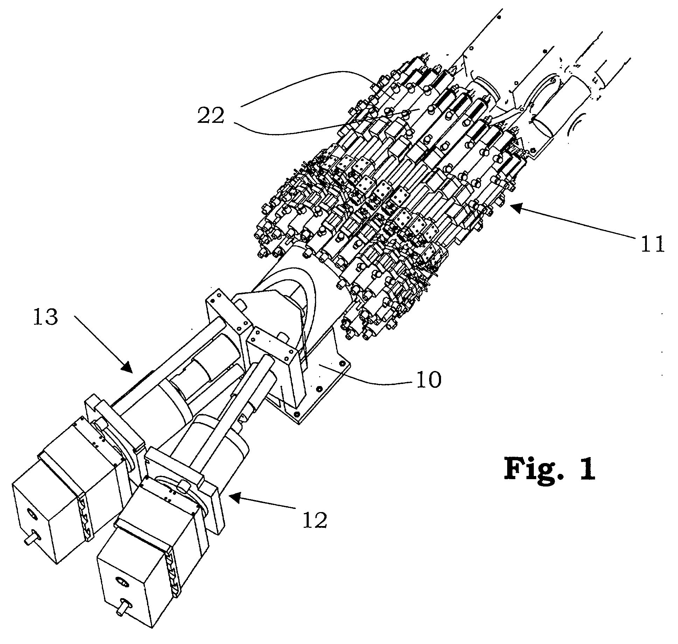

- Fig. 1 is an overall perspective view of the machine;
- Fig. 2 is a longitudinal section of the machine portion comprising the moulding units;
- Fig. 3 is a particular view in longitudinal section of one of the moulding units included in the machine.

Mounted on a base identified by 10 are rubber feeding and injection units, each unit, taken as a whole, being generally denoted at 12 and 13 and not described in detail because it is known by itself and of non-critical structure and configuration to the aims of the invention. Advantageously, the feeding units 12 and 13 are of a known type and contemplate a piston-acting plasticization screw i.e. a screw provided with a rotatory thrust movement like an Archimedes' screw combined with the possibility of an axial piston-thrust movement.

The machine portion comprising the moulding unit, to which more specifically the invention relates, is generally identified by 11.

Provision is made for a stationary core 20 around which an annular support element 21 carrying a plurality of moulding units 22 is fastened.

Mounted between the core 20 and support 21 is a cylindrical movable dispensing body 23 carried by a shaft 24 connected to a power unit 25 to operate a step-by-step rotation controlled by the dispenser 23.

In more detail, through a general channel 26, core 20 is reached by the rubber to be moulded, coming from injectors 12 and 13 which ensure a constant injection pressure in time, i.e. a continuous pressurised feeding.

This channel 26 branches off into radial ducts 27. Advantageously, in the embodiment shown, the radial ducts are distributed in three ranks disposed in offset transverse planes of the core 20, and denoted at 27, 27' and 27" respectively, in order to avoid the useful solid core section being too much reduced due to the presence of a too great number of coplanar radial ducts, each terminating at a moulding unit 22.

By distributing ducts 27 in different planes offset from each other, and correspondingly distributing the moulding units in different planes, the number of radial ducts 27 lying in the same transverse plane of core 20 is shared out so that the residual solid section is still sufficient to withstand the stresses resulting from the pressures in the ducts, as well as the external loads to which the core is submitted.

Disposed around the core 20 is the rotating dispensing element 23 carrying passageways 28 each of which is adapted to be arranged, for a predetermined angular portion of the dispenser, in alignment with a duct 27 formed in the core so as to dispose it in communication with a duct 29 constituting the extension thereof and feeding the rubber blend to a moulding unit 22.

Obviously, in the dispenser a passageway 28 is provided for each offset rank on which ducts 27 and ducts 29 aligned therewith can be disposed.

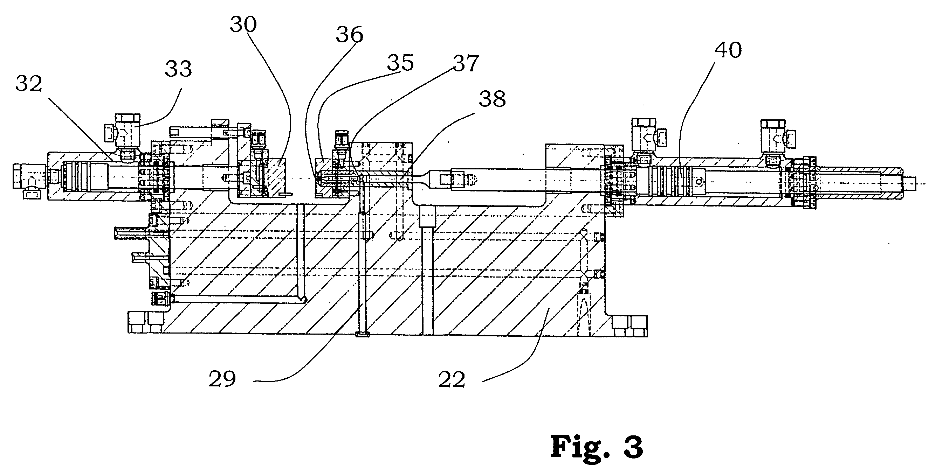

One of the moulding units 22 is shown in more detail in Fig. 3.

Each moulding unit comprises a mould half 30 carried by the rod of a piston 31 moving in chamber 32 under the effect of a hydraulic fluid under pressure.

For movement of the double-acting piston 31 fittings 33 and 34 are provided for connection with a hydraulic drive circuit not shown.

The mould half 30 can be brought by piston 31 close to the mould half 35 to form the moulding cavity into which the blend can be introduced through an injection nozzle 36. The blend is fed to the nozzle from a chamber 37 in which an injection metering piston 38 moves, which piston is operated to execute a stroke of an amount controlled by a piston 40. Piston 40 is provided with an adjustable mechanical stop in order to define the stroke and consequently the displacement in chamber 37.

As known, the moulding operation involves the steps of moving the mould halves close to each other, creating the vacuum to a predetermined value in the mould with the mould halves close to each other and the vacuum seal in a closed condition, injecting a metered blend amount, waiting for completion of the rubber vulcanisation, opening the mould, withdrawing the formed piece therefrom.

The whole operation takes a relatively long period of time and only during a small fraction of this time the blend-feeding duct 29 is required to be maintained in communication with the blend feeders 12 and 13 and substantially with the feeding channel 26.

Theoretically, duration of this communication is exclusively required during the retraction step of piston 38 for carrying out a driven stroke in order to cause admission to chamber 37 of a metered blend amount.

Only during this feeding step the dispenser is required to be in such a position that ducts 27 and 29 related to the injection unit are brought into communication with each other, i.e. with a passageway 28 in alignment with them.

As a result, the moulding process of each unit can mostly take place during a period in which the dispenser element is disposed in such a manner that it can connect other moulding units with the blend feeding unit, to enable admission thereto of the metered blend amount required for a moulding operation.

A central control unit for the whole machine, herein not shown, which may consist of a computer-based control group, controls the different steps of the moulding operation of each unit and the step-by-step advancing means of the dispenser suitably in an appropriate phase so as to enable the dispenser to bring duct 29 related to each unit into communication with the respective duct 27 when admission of blend to the moulding unit is required.

Therefore, by controlling the moulding operations carried out by each unit according to a suitable sequential phase displacement, it is possible for a plurality of units, and possibly all units, to be simultaneously operational, so that the machine productivity is really a multiple of the productivity of each unit.

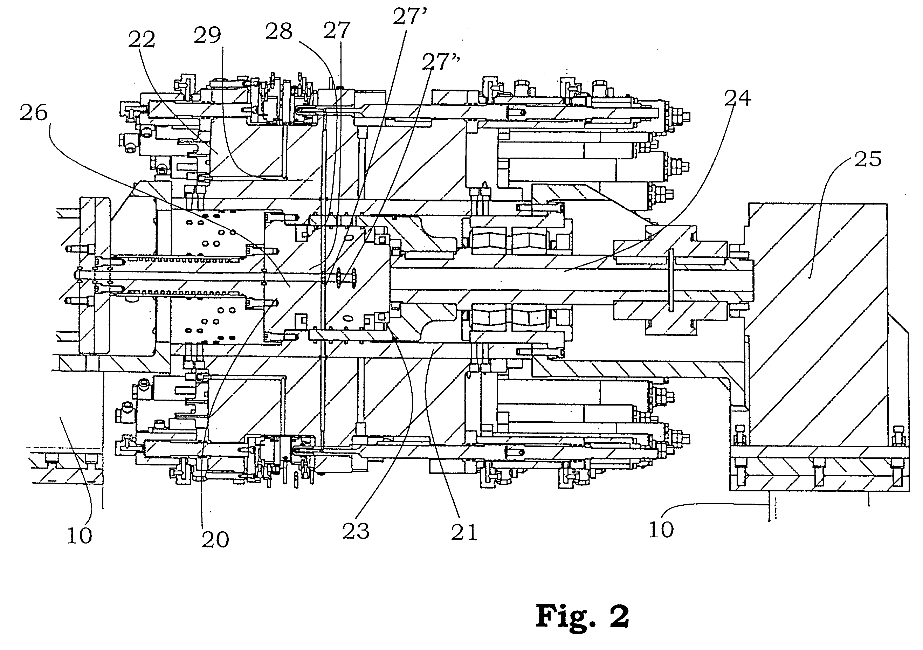

In the embodiment shown (Fig. 2) it is illustrated how the dispenser 22 brings two diametrically-opposite moulding units into communication with the feeding unit, considering as available for completion of the moulding operation of each unit the time imposed to the dispenser for rotating through 180°, in a sequence of 14 steps, so that the step of sequentially feeding with blend all the 28 moulding units radially mounted on support 21 should be carried out. Additional ducts are formed in core 20 and support 21 of the moulding unit 22 for circulation of a fluid for thermal conditioning of the parts concerned with the blend circulation, according to known technological requirements; therefore the related circuit will not be herein described in detail.

Due to the particular structure of the machine in accordance with the invention, the ducts holding the thermal-conditioning fluid can follow a path extending in core 20 and advantageously going on in a direct way into support 21 and then into the body of units 22. Accomplishment of the above described machine is to be considered by way of example only and many modifications can be done without departing from the scope of the invention.

In particular, the dispensing element can take a great number of shapes.

Arrangement of the different moulding units in axially spaced apart ranks enables also ducts 27 to be disposed in spaced apart ranks in the core, so that transverse core sections too much impoverished in material do not exist therein.

However, other construction solutions can be adopted to this aim. For example, channel 26 can feed a single annular duct within core 20 and close to the periphery thereof, so as to minimise the length of ducts 27 and the consequent absence of material at the section in which they are formed. In this way, arrangement of all ducts 27 in a single plane transverse to the core could be provided and, as a result, the circumferential alignment of all moulding units.

Generally, the dispensing device may have any configuration provided it fulfils the function of selectively connecting the predetermined number of moulding units to the blend feeding unit for each of the positions that the dispensing device is driven to take step by step.

## Claims

1. A machine for injection moulding of rubber products, comprising a plurality of moulding units to be operated separately for carrying out a moulding cycle in which the moulding units are mounted on a common support and each unit receives the rubber blend to be used in moulding through a duct branched off from a channel fed by a common injection unit, the branched-off feeding ducts being intercepted by a dispensing element moved step by step to sequentially open a predetermined number of the branched-off ducts corresponding to the moulding units that are driven to receive the rubber to be introduced into the mould for execution of moulding.

2. A machine as claimed in claim 1, **characterised in that** said common support of the moulding units is in the form of a drum on the periphery of which the moulding units are mounted and in which the separated branched-off ducts for rubber admission to each of the units are extended, a central dispenser sequentially bringing said branched-off ducts into communication with channels permanently fed from a common injection unit.

3. A machine as claimed in claim 2, **characterised in that** the support of the moulding units is in the form of a cylindrical hollow body having a core disposed therein, on the surface of which ducts for admission of the blend under pressure open, a rotating element being interposed between the core and the support, which element is provided with one or more passageways to bring one or more of said admission ducts into communication with one or more ducts in said support which open in alignment with the admission ducts on the inner surface of the support and each feeding a moulding unit, power means causing rotation step by step of the rotating element so as to sequentially bring its passageways in alignment with the ducts in the core and in the support, to constitute the blend dispenser.

4. A machine as claimed in claim 1, **characterised in that** each moulding unit comprises a chamber receiving the blend from the branched-off ducts and in which a metering piston pushing the blend into the mould of the unit in a controlled amount is moved.

5. A machine as claimed in claim 3, **characterised in that** said core and support of the moulding units have a portion in direct contact, in which portion there are ducts for circulation of a fluid to carry out thermal conditioning of the machine parts.

6. A machine as claimed in claim 1, **characterised in that** the admission ducts are alternately distributed in a plurality of transverse planes spaced apart from each other.

7. A machine as claimed in claim 1, **characterised in that** said common injection unit sends some blend to the duct in a continuous manner to substantially keep pressure constant in said common duct selectively intercepted by said dispenser.

8. A machine as claimed in claim 1, **characterised in that** said common injection unit consists of at least one device of the type involving a rotating plasticization screw provided with an axial movement so as to act with a piston effect.
